# EUROPÄISCHE PATENTANMELDUNG

(11) **EP 1 520 939 A2**
(43) Veröffentlichungstag der Anmeldung: **06.04.2005**
(21) Anmeldenummer: 04104727.5
(22) Anmeldetag: 28.09.2004
(51) Int. Cl.: E02F 3/627, E02F 9/24, B60R 21/13, B60R 21/11

(54) **Ladegerät**

(30) Priorität: 04.10.2003 DE 10346115
(71) Anmelder: DEERE & COMPANY, Moline, Illinois 61265-8098 (US)
(72) Erfinder: Boucher, Jean-Francois, 45000 Orleans (FR)
(74) Vertreter: Holst, Sönke, Dr.

(57) **Zusammenfassung**

Es wird ein Ladegerät (10) beschrieben, mit einer einen Montagebereich (40) für eine Ladervorrichtung (26) aufweisenden Aufnahmevorrichtung (24), insbesondere für einen Frontlader. Das Ladegerät (10) enthält des Weiteren eine Schutzvorrichtung (48), die an das Ladegerät (10) oder an die Aufnahmevorrichtung (24) gekoppelt ist. Die Schutzvorrichtung (48) ist in eine Schutzstellung und in eine Außerschutzstellung bringbar.

Um zu gewährleisten, dass die Schutzvorrichtung (48) bei montierter Ladervorrichtung (26) in die Schutzstellung gebracht wird, ist vorgesehen, dass der Montagebereich (40) durch die Schutzvorrichtung (48) in der Außerschutzstellung blockierbar ist.

## Beschreibung

Ladegerät, mit einer einen Montagebereich für eine Ladervorrichtung aufweisenden Aufnahmevorrichtung, insbesondere für einen Frontlader, und einer an das Ladegerät oder an die Aufnahmevorrichtung gekoppelten Schutzvorrichtung, die in eine Schutzstellung und in eine Außerschutzstellung bringbar ist. Des weiteren betrifft die Erfindung eine Aufnahmevorrichtung einer Ladervorrichtung.

Im Stand der Technik sind landwirtschaftliche Fahrzeuge wie z. B. Traktoren bekannt, mit denen mittels einer Ladervorrichtung, beispielsweise einem Frontlader, Laderarbeiten wie z. B. Stapelarbeiten, aber auch Planierarbeiten, Schaufelarbeiten oder Räumarbeiten, verrichtet werden können. Zum Teil werden derartige Fahrzeuge auch ohne Fahrzeugkabine angeboten, insbesondere wenn es sich um kleinere Fahrzeuge, wie z. B. Kleintraktoren, handelt, mit denen neben Laderarbeiten auch andere Arbeiten auf engem und insbesondere niedrigem Raum verrichtet werden können. Zum Schutz des Geräteführers sind derartige Fahrzeuge mit einem Überrollschutz in Form eines sich in vertikaler Richtung erstreckenden Schutzbügels versehen, der hinter oder vor dem Geräteführersitz angeordnet ist.

Der Schutzbügel kann bei Arbeiten auf engem oder niedrigem Raum hinderlich sein, weshalb viele Hersteller derartige Fahrzeuge mit einem schwenkbaren oder auch faltbaren Schutzbügel anbieten, so dass bei Bedarf bzw. auf Wunsch das Fahrzeug mit heruntergeschwenktem bzw. zusammengefaltetem Schutzbügel betrieben werden kann.

Derartige Fahrzeuge werden beispielsweise von der Firma BCS angeboten. In einer Produktbroschüre "VALIANT 400-500" der Firma BCS, Druckvermerk 90100766 - 07/2002 wird ein Kleintraktor mit montierter Ladervorrichtung offenbart, bei dem der Schutzbügel aus einer vertikalen Stellung heraus über die frontseitige Haube des Fahrzeugs geschwenkt und in einer horizontalen Stellung arretiert werden kann. Problematisch hierbei ist, dass bei Installation der Ladervorrichtung der schwenkbare Schutzbügel in einer horizontalen Stellung verbleiben kann, so dass ein Betreiber des Fahrzeugs versäumen könnte, den Schutzbügel aufzurichten. Ohne Schutzbügel ist jedoch die Sicherheit des Betreibers beeinträchtigt.

Das der Erfindung zugrundeliegende Problem wird darin gesehen, dass eine Beeinträchtigung der Sicherheit des Geräteführers bei Laderarbeiten eintreten kann.

Dieses Problem wird in erfinderischer Weise durch die Lehre von Patentanspruch 1 und 11 gelöst, wobei in den davon abhängigen Patentansprüchen jeweils vorteilhafte Weiterentwicklungen gelehrt werden.

Erfindungsgemäß ist der Montagebereich durch die Schutzvorrichtung in der Außerschutzstellung blockierbar. Vorzugsweise ist dazu ein Schwenkmechanismus für die Schutzvorrichtung derart ausgebildet, dass die Schutzvorrichtung, oder ein Teil davon, in der Außerschutzstellung in den Montagebereich der Aufnahmevorrichtung eingreift, so dass eine Montage bzw. ein Anschließen der Ladervorrichtung nicht möglich ist. Alternativ kann anhand der Schwenkbewegung auch ein zweiter Mechanismus ausgelöst werden, der den Montagebereich blockiert. Durch Blockieren des Montagebereichs wird gewährleistet, dass die Schutzvorrichtung erst in die Schutzstellung bewegt werden muss, bevor die Ladervorrichtung an den Montagebereich montiert werden kann. Bei Betreiben des Ladegeräts ohne Ladervorrichtung sollte zweckmäßigerweise gewährleistet sein, dass die Schutzvorrichtung in die Außerschutzstellung schwenkbar ist. Dazu kann eine Halterung oder eine Verankerung für die Schutzvorrichtung zwischen einer Bedienungsplattform des Ladegeräts und Aufnahmevorrichtung angeordnet sein. Vorzugsweise ist die Aufnahmevorrichtung für die Ladervorrichtung seitlich des Ladegerätes angebracht. Des Weiteren ist auch eine Anordnung der Halterung für die Schutzvorrichtung zwischen Ladegerätflanke und Aufnahmevorrichtung möglich, so dass der Schutzbügel auf der Innenseite der Aufnahmevorrichtung verschwenkbar angeordnet ist. Ferner ist es auch denkbar, die Schutzvorrichtung direkt an die Aufnahmevorrichtung für die Ladervorrichtung zu befestigen und somit die Halterung bzw. Verankerung der Schutzvorrichtung und die Aufnahmevorrichtung als kombiniertes Bauteil auszubilden. Über ein Scharnier oder einen Bolzen kann die Schutzvorrichtung an der Aufnahmevorrichtung derart verschwenkbar angelenkt werden, dass die Schutzvorrichtung beim Verschwenken nicht mit Bereichen der Aufnahmevorrichtung kollidiert. Ein Verschwenken der Schutzvorrichtung in die Außerschutzstellung ist dann zweckmäßig, wenn eine möglichst geringe Höhe des Ladegeräts erforderlich ist, um beispielsweise bei Arbeiten in Obstplantagen in die Fahrgasse hereinragende Äste nicht zu beschädigen.

Vorzugsweise ist eine Arretiereinrichtung enthalten, anhand derer die Schutzvorrichtung in der Schutzstellung oder in der Außerschutzstellung arretierbar ist. Die Arretierung kann beispielsweise durch einen Federstift oder Bolzen erfolgen, der sich durch Bauteile an der Schutzvorrichtung und durch eine entsprechende Bohrung an der Halterung bzw. Verankerung der Schutzvorrichtung in einem Schwenkbereich der Schutzvorrichtung erstreckt. Denkbar ist auch, dass die Aufnahmevorrichtung mit entsprechenden Bohrungen zur Arretierung in dem Schwenkbereich der Schutzvorrichtung versehen ist, so dass die Schutzvorrichtung in der Schutzstellung oder in der Außerschutzstellung arretierbar ist. Durch die Arretierung können ungewollte Schwenkbewegungen und Vibrationen vermieden und die Schutzvorrichtung bei montierter und nicht montierter Ladervorrichtung fest in der Schutzstellung gehalten werden.

Die Arretiereinrichtung belegt vorzugsweise wenigstens einen Befestigungspunkt oder Montagepunkt für die Ladervorrichtung, wenn die Schutzvorrichtung in ihre Außerschutzstellung bewegt bzw. in der Außerschutzstellung arretiert ist. Dadurch wird allein schon anhand des Montagevorgangs gewährleistet, dass die Schutzvorrichtung in ihre Schutzstellung bewegt werden muss, um den in der Außerschutzstellung belegten Befestigungspunkt für die Ladervorrichtung freizugeben.

Die Schutzvorrichtung, die neben ihrer Funktion als Überrollbügel auch herabfallende Ladung abwehren soll, weist vorzugsweise einen oberen Teilbereich auf, der sich in der Schutzstellung im Wesentlichen horizontal über die Bedienungsplattform erstreckt. In der Schutzstellung verläuft die Schutzvorrichtung auf beiden Seiten zunächst vertikal nach oben und weist dann nach Erreichen einer maximalen Höhe einen oberen Teilbereich auf, der sich in horizontaler Richtung über die Bedienungsplattform erstreckt. Dieser Bereich kann mehreckig ausgebildet sein oder auch einen bogenförmigen Verlauf aufweisen. Durch den genannten Teilbereich wird eine rahmenförmige Schutzabdeckung oberhalb der Bedienungsplattform geschaffen, so dass der Geräteführer des Ladegeräts durch die Schutzvorrichtung von vorn und von oben gegen herabfallende Ladung geschützt wird.

Vorzugsweise entspricht der Verlauf des Teilbereichs im Wesentlichen der Oberflächenkontur der Haube, so dass die Schutzvorrichtung sich in der Außerschutzstellung idealerweise um die Haube legen kann und die Sicht nicht versperrt.

Um den Schutz des Geräteführers weitergehend zu verbessern, ist ein Schutzbügel enthalten, der sich rückwärtig der Bedienungsplattform im Wesentlichen vertikal erstreckt.

Vorzugsweise ist der Schutzbügel faltbar ausgebildet, so dass auch dort ein reduziertes Außenmaß des Ladegeräts einstellbar ist, beispielsweise für Fahrten in Obstplantagen oder für Fahrten durch niedrige Unterführungen und dergleichen. Der Schutzbügel kann dazu beispielsweise auf halber Höhe mit einem Scharnier versehen und dadurch ebenfalls in eine Außerschutzstellung gebracht werden.

In einer weiteren Ausführungsform sind die Schutzvorrichtung und/oder der Schutzbügel in ihren wirksamen Länge stufenweise oder stufenlos veränderbar ausgebildet. Dies wird beispielsweise dadurch erzielt, dass die Bauteile der Schutzvorrichtung und/oder des Schutzbügels teleskopierbar angeordnet und je nach Anforderung in ihrer wirksamen Länge variabel arretierbar sind. Die Arretierung kann z. B. anhand von Bolzen erfolgen, die durch entsprechend beabstandete Bohrungen gesteckt werden. Denkbar sind hier auch Spannvorrichtungen, in Form von Feststellschrauben, mit denen die Bauteile zueinander bzw. ineinander verspannt werden können. Eine stufenweise Veränderung der wirksamen Länge hat den Vorteil, dass nicht vollständig auf die Schutzfunktion der Schutzvorrichtung bzw. des Schutzbügels verzichtet werden muss, wenn nur eine geringfügige Reduzierung der Höhe des Ladegerätes erforderlich ist. Die Schutzvorrichtung oder auch der Schutzbügel müssen dann nicht in die Außerschutzstellung gebracht werden, so dass, wenn auch mit reduziertem Ausmaß, weiterhin eine Schutzvorrichtung bzw. ein Schutzbügel zum Schutz des Geräteführers installiert bleibt.

Vorzugsweise kann die Schutzvorrichtung in der Schutzstellung mit dem Schutzbügel verbunden werden. Dadurch ist es möglich, dass die Schutzvorrichtung in Verbindung mit dem Schutzbügel eine Art Schutzkäfig um den Geräteführer bzw. um die Bedienungsplattform herum bilden. Gleichzeitig wird dadurch die Stabilität der Schutzvorrichtung bzw. des Schutzbügels verbessert. Der sich an der Schutzvorrichtung horizontal erstreckende Teilbereich wird dazu mit einer lösbaren Verbindung fest mit dem Schutzbügel verbunden. Denkbar ist, dass nur der Schutzbügel oder auch die Schutzvorrichtung und der Schutzbügel einen oberen Teilbereich aufweisen, der sich horizontal über die Bedienungsplattform erstreckt. Entsprechend können dann die oberen Teilbereiche miteinander verbunden werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht eines erfindungsgemäßen Ladegerätes mit einer Aufnahmevorrichtung,
- Fig. 2: eine Seitenansicht des erfindungsgemäßen Ladegerätes aus Figur 1 mit einer montierten Ladervorrichtung,
- Fig. 3: eine Draufsicht des erfindungsgemäßen Ladegeräts aus Figur 1,
- Fig. 4: eine Detailansicht der Aufnahmevorrichtung aus Figur 1 und Figur 2 bei nicht montierter Ladervorrichtung,
- Fig. 5: eine Detailansicht der Aufnahmevorrichtung aus Figur 1 und Figur 2 bei montierter Ladervorrichtung und
- Fig. 6: eine Querschnittsansicht eines Koppelteils der Ladervorrichtung entlang der Schnittebene A-A und in Blickrichtung der dazugehörigen Pfeile aus Figur 5.

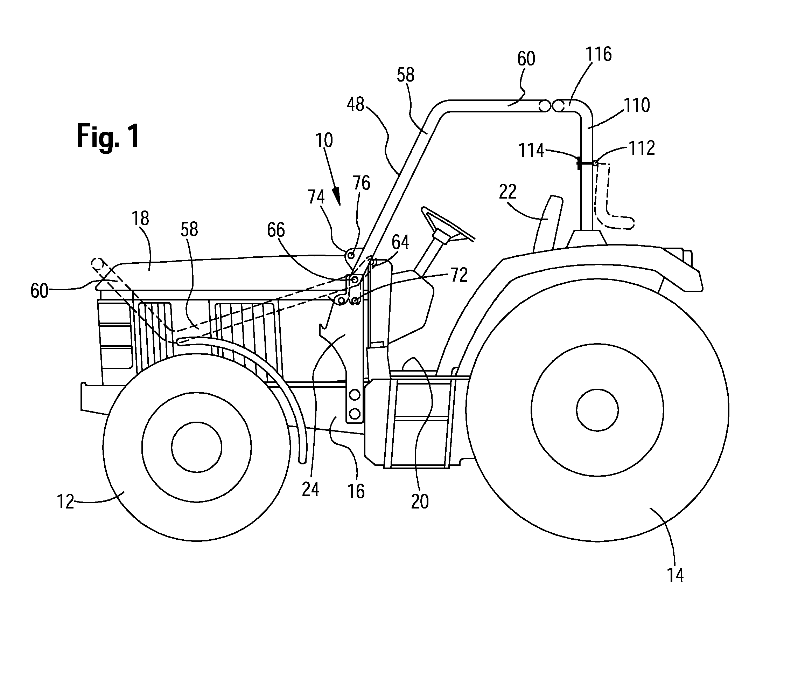

Die Figuren 1 bis 3 zeigen ein erfindungsgemäßes Ladegerät 10. Als Ladegerät 10 wird in dem gezeigten Ausführungsbeispiel ein landwirtschaftlicher Schlepper dargestellt, wobei auch andere Ladegeräte, wie z. B. Kleintraktoren, forstwirtschaftliche Fahrzeuge, Baufahrzeuge oder dergleichen geeignet sind. Das Ladegerät 10 weist Vorder- und Hinterräder 12, 14 auf, die mit einem Rahmen 16 des Ladegeräts 10 in Verbindung stehen. An der Vorderseite des Ladegeräts 10 ist oberhalb des Rahmens 16 eine Haube 18 ausgebildet. Zwischen den Rädern 12, 14 des Ladegeräts 10 schließt sich oberhalb des Rahmens 12 eine Bedienungsplattform 20 mit einem Geräteführersitz 22 an. Das Ladegerät 10 enthält beidseitig der Haube 18 angeordnete Aufnahmevorrichtungen 24, die zur Aufnahme und Montage einer Ladervorrichtung 26 dienen.

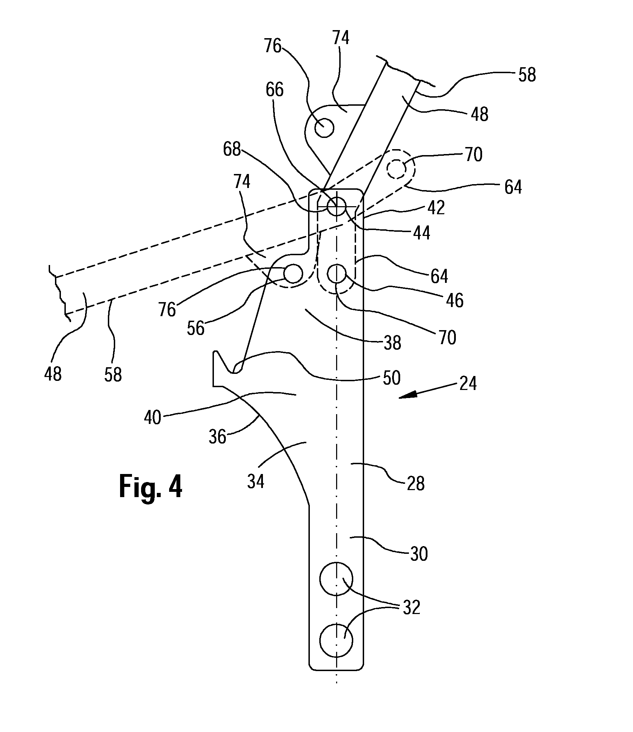

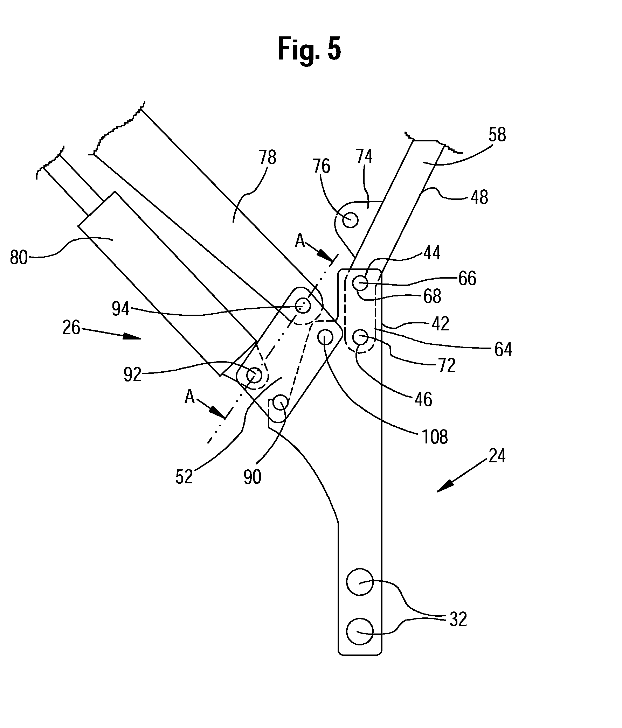

Die Aufnahmevorrichtung 24 ist detailliert in den Figuren 4 und 5 dargestellt. Die Aufnahmevorrichtung 24 besteht im Wesentlichen aus einem vertikal ausgerichteten Träger 28, der einen schmalen unteren Endbereich 30 mit darin angeordneten Bohrungen 32, die zur Befestigung des Trägers 28 an den Rahmen 16 des Ladegeräts 10 dienen. Die Befestigung des Trägers 28 kann beispielsweise durch Gewindebolzen (nicht gezeigt) erfolgen, die durch die Bohrungen 32 geführt und mit dem Rahmen 16 verschraubt werden. Der Träger 28 weist einen sich erweiternden Übergangsbereich 34 auf, der eine sich einseitig vom Träger 28 in Vorwärtsrichtung bogenförmig erstreckende Kontur 36 aufweist und in einen breiten oberen Endbereich 38 mündet. Der obere Endbereich 38 enthält einen oberhalb der sich bogenförmig erstreckenden Kontur 36 angeordneten Montagebereich 40 für die Ladervorrichtung 26, sowie einen freien Endbereich 42.

Im freien Endbereich 42 am oberen Endbereich 38 der Aufnahmevorrichtung 24 ist eine Bohrung 44 zur schwenkbaren Lagerung und eine Bohrung 46 zur Arretierung einer Schutzvorrichtung 48 ausgebildet, deren Schwenkachsen horizontal und quer zur Ladegerätelängsachse verlaufen.

Der Montagebereich 40 weist eine mit einer hakenförmigen Kontur ausgebildete und in Vorwärtsrichtung geöffnete Lagerpfanne 50 auf, die zur Aufnahme eines an einem Koppelteil 52 der Ladervorrichtung 26 angeordneten buchsenförmigen Lagerelements 54 dient. Oberhalb der Lagerpfanne 50, in einem Winkel von ca. 30° zur Lagerpfanne 50, in Höhe der Bohrung 46, ist zwischen der Bohrung 46 und der Lagerpfanne 50 eine Bohrung 56 zur Befestigung der Ladervorrichtung 26 vorgesehen.

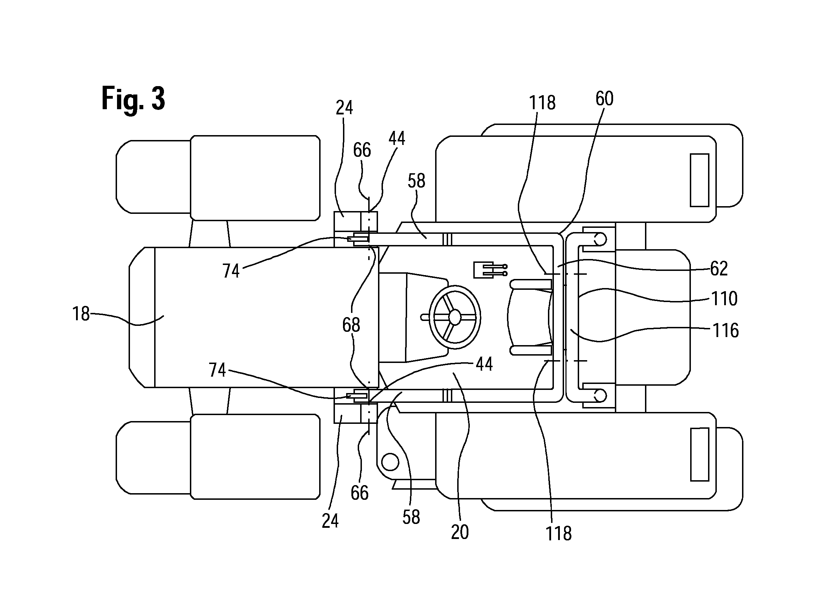

Die Schutzvorrichtung 48 besteht vorzugsweise aus einem gebogenen Rundprofil, wobei auch andere Profile geeignet sind, die sowohl als Hohlprofil oder als Vollprofil ausgebildet sein können. Der Schutzbügel 48 erstreckt sich von einer Ladegerätseite auf die andere Ladegerätseite und weist beidseitig des Ladegeräts 10 ein seitliches Profil auf, welches einen langen Schenkel 58 und einen um ca. 60° davon abgewinkelten kurzen Schenkel 60 aufweist. Des Weiteren ist eine quer zum Ladegerät 10 verlaufende Verstrebung 62 enthalten, die beidseitig die kurzen Schenkel 60 der Schutzvorrichtung 48 miteinander verbindet, so dass, in der in Figur 3 dargestellten Draufsicht, die Schutzvorrichtung 48 ein auf der Seite liegendes und in Vorwärtsrichtung geöffnetes "U" darstellt. An beiden Enden des "U" ist ein weiterer kurzer Schenkel ausgebildet, der in einem Winkel von ca. 10-15° zum langen Schenkel 58 abgewinkelt ist und einen Schwenkendbereich 64 bildet.

Die Schutzvorrichtung 48 ist schwenkbar um eine Schwenkachse 66 (siehe Fig. 3) an die Aufnahmevorrichtungen 24 angelenkt. Der Schwenkendbereich 64 dient dabei zur Lagerung und Arretierung der Schutzvorrichtung 48. Die Anlenkung erfolgt beidseitig des Ladegerätes 10 mittels Bolzen (nicht gezeigt), welche durch die Bohrungen 44 an der Aufnahmevorrichtung 24 und durch Bohrungen 68 im Schwenkendbereich 64 der Schutzvorrichtung 48 geführt werden (siehe Figur 3), so dass die Schutzvorrichtung 48 schwenkbar auf Bolzen gelagert ist.

In dem beschriebenen Ausführungsbeispiel erfolgt die Lagerung bzw. Verankerung der Schutzvorrichtung 48 direkt an der Aufnahmevorrichtung 24 wobei in einem anderen Ausführungsbeispiel auch eine nicht mit der Aufnahmevorrichtung 24 kombinierte, sondern eine gesonderte und mit dem Rahmen verbundene Verankerung für die Schutzvorrichtung 48 vorgesehen werden kann.

Wie in den Figuren 1 und 4 gezeigt ist, kann die Schutzvorrichtung 48 aus einer im Wesentlichen vertikalen Schutzstellung, in der die Schutzvorrichtung 48 zum Schutz eines Geräteführers aufgerichtet ist, in eine im Wesentlichen horizontale Außerschutzstellung geschwenkt werden (gestrichelte Linie), in der die Schutzvorrichtung 48, zur Reduzierung der Ladegeräthöhe, über die Haube 18 des Ladegeräts 10 gelegt wird. In der Schutzstellung verlaufen die langen Schenkel 58 beidseitig des Ladegeräts 10 parallel zueinander (siehe Fig. 3) nach oben und sind entsprechend der Abwinklung der Schwenkendbereiche 64 um ca. 10-15° zum Heck des Ladegeräts geneigt. Die kurzen Schenkel 60 verlaufen über der Bedienungsplattform 20 im Wesentlichen horizontal in Längsrichtung zum Heck des Ladegeräts 10, wobei die Verstrebung 62 sich quer zur Längsrichtung über die Bedienungsplattform 20 erstreckt.

Die Schwenkendbereiche 64 sind an den freien Endbereichen jeweils mit einer Bohrung 70 versehen, die zur Arretierung der Schutzvorrichtung 48 dient. Mittels Bolzen 72 zur Arretierung, beispielsweise in Form von Zylinderbolzen, die durch die Bohrungen 46 an den Aufnahmevorrichtungen 24 und durch die Bohrungen 70 der Schwenkendbereiche 64 gesteckt werden, kann die Schutzvorrichtung 48 in der Schutzstellung arretiert werden.

Zur Arretierung der Schutzvorrichtung 48 in der Außerschutzstellung sind die langen Schenkel 58 der Schutzvorrichtung 48 Laschen 74 versehen. Die Laschen 74 sind in dem gezeigten Ausführungsbeispiel in Form von dreieckförmigen Blechelementen in einem Bereich nahe der Schwenkachsen 66 auf den langen Schenkeln 58 der Schutzvorrichtung 48 angeordnet, wobei die dreieckförmigen Blechelemente parallel zu den Aufnahmevorrichtungen 24 ausgerichtet und in Vorwärtsrichtung weisend angeordnet sind. Die Laschen 74 sind mit Bohrungen 76 versehen, die zur Arretierung dienen. Die Bohrungen 76 sind so angeordnet, dass sie die gleichen Abstände zur Schwenkachse 66 aufweisen, wie die zur Befestigung der Ladervorrichtung 26 vorgesehenen Bohrungen 56 an den Aufnahmevorrichtungen 24.

Wie in Figur 1 deutlich wird, kann die Schutzvorrichtung 48, durch Entfernen der Bolzen 72 aus den Bohrungen 46, 70, aus der Schutzstellung gelöst und durch Verschwenken in Vorwärtsrichtung über die Haube 18 des Ladegeräts 10 gelegt werden (gestrichelt dargestellt), so dass die langen Schenkel 58 der Schutzvorrichtung 48 in eine im Wesentlichen horizontale Lage gebracht werden. Beim Verschwenken führen die Schwenkendbereiche 64 eine Schwenkbewegung um die Schwenkachse 66 in Aufwärtsrichtung aus und werden aus den oberen Endbereichen 38 der Aufnahmevorrichtungen 24 herausgeführt. Gleichzeitig führen dabei die Laschen 74 eine Schwenkbewegung um die Schwenkachse 66 in Abwärtsrichtung aus, und werden in die oberen Endbereiche 38 der Aufnahmevorrichtungen 24 hineingeführt, bis die Bohrungen 76 der Laschen 74 mit den Bohrungen 56 für die Ladervorrichtung 26 fluchten. Durch Einsetzen der Bolzen 72 in die Bohrungen 56, 76, wird die Schutzvorrichtung 48 in der Außerschutzstellung arretiert.

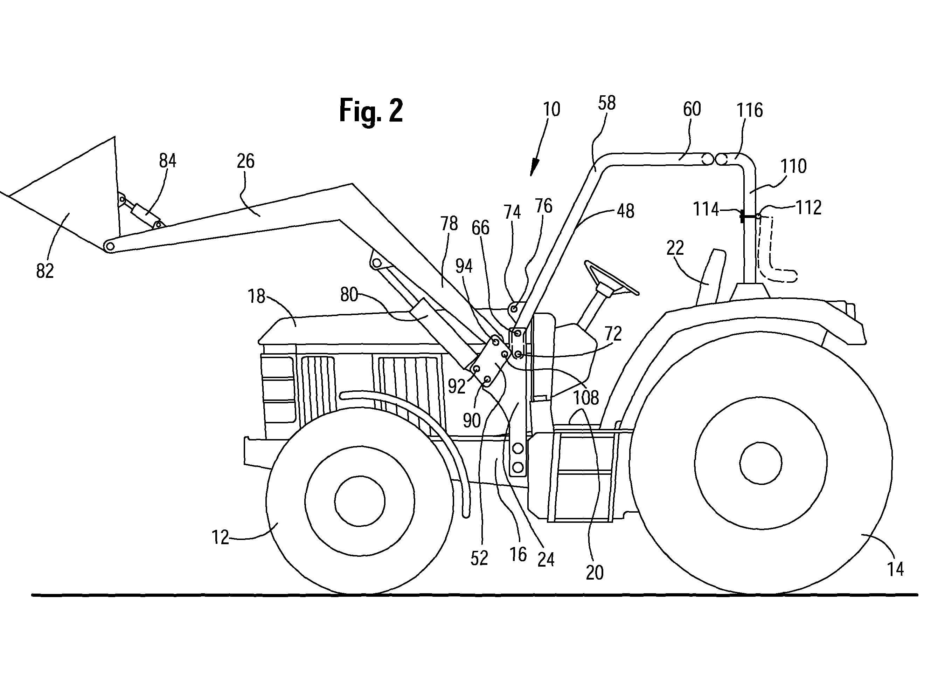

Wie in den Figuren 2 und 5 dargestellt ist, kann die Ladervorrichtung 26 an das Ladegerät 10 montiert werden. Die Ladervorrichtung 26 enthält beidseitig der Haube 18 die Koppelteile 52, welche als Montageelement dienen. Des Weiteren ist beidseitig der Haube 18 eine Laderschwinge 78 und ein Hubzylinder 80 enthalten, wobei der Hubzylinder 80 zum Heben und Senken der Laderschwinge 78 dient. An den freien Endebereichen der Laderschwingen 78 ist ein Laderwerkzeug 82 angeordnet, welches über einen Betätigungszylinder 84 angesteuert werden kann. Die Koppelteile 52 stellen jeweils eine Verbindung zwischen der Aufnahmevorrichtung 24, der Laderschwinge 78 und dem Hydraulikzylinder 80 her.

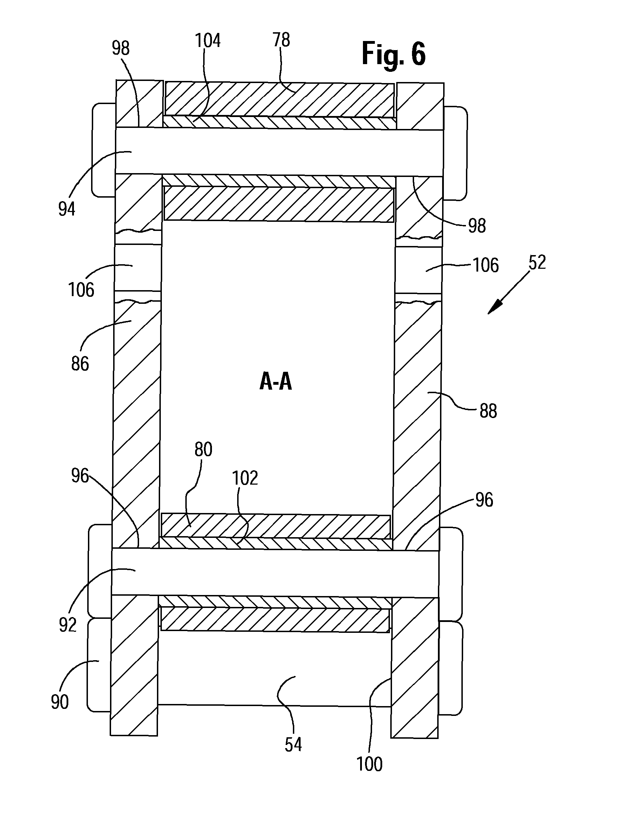

Der Aufbau des Koppelteils 52 ist in Figur 6 dargestellt. Das Koppelteil 52 enthält zwei parallel zueinander angeordnete, trapezförmige Platten 86, 88, welche mittels Bolzen 90, 92, 94 miteinander verbunden sind. Zur Aufnahme der Bolzen sind an den Platten 86, 88 Bohrungen 96, 98, 100 angeordnet. Zwischen den Platten 86, 88 sind buchsenförmige Lagerelemente 54, 102, 104 angeordnet, durch die sich die Bolzen 90, 92, 94 erstrecken und anhand derer sich die Platten 86, 88, mit vorgegebenem Abstand zueinander, fest miteinander verspannen lassen. Die Bolzen 90, 92, 94 können beispielsweise mit den Platten 86, 88 verschraubt, verschweißt oder, wie in Figur 6 dargestellt ist, vernietet sein. Der Bolzen 94 bildet in Verbindung mit dem buchsenförmigen Lagerelement 104 ein Schwenklager für die Laderschwinge 78, und der Bolzen 92 bildet in Verbindung mit dem buchsenförmigen Lagerelement 102 eine Lagerstelle für den Hydraulikzylinder 80, wie besonders gut in Figur 5 zu erkennen ist. Der Bolzen 90 bildet in Verbindung mit dem buchsenförmigen Lagerelement 54 eine Lagerachse, die zur Ankopplung und Montage der Ladervorrichtung 26 dient. Des Weiteren enthält das Koppelteil 52 in den Platten 86, 88 angeordnete Bohrungen 106, die in Kombination mit einem Bolzen 108 und mit der Bohrung 56 zur Befestigung des Koppelteils 52 an die Aufnahmevorrichtung 24 dienen.

Die Ankopplung und Montage der Ladervorrichtung 26 wird ausgehend von der Außerschutzstellung der arretierten Schutzvorrichtung 48 wie folgt durchgeführt: In der Außerschutzstellung muss zur Ankopplung der Ladervorrichtung 26 zunächst die arretierte Schutzvorrichtung 48 aus der Arretierung gelöst werden, da die Bohrungen 56 zur Arretierung der Schutzvorrichtung 48 in der Außerschutzstellung besetzt und die Aufnahmevorrichtungen 24 für die Aufnahme der Ladervorrichtung 26 blockiert sind. Eine Montage der Ladervorrichtung 26 in diesem Zustand ist nicht möglich. Das Lösen der Arretierung erfolgt, indem die Bolzen 72 aus den Bohrungen 76 und aus den Bohrungen 56 entfernt werden. Erst durch Verschwenken der Schutzvorrichtung 48 in die Schutzstellung, werden die Bohrungen 56 für eine Befestigung der Koppelteile 52 frei gegeben. Die Schutzvorrichtung 48 wird durch Einsetzen des Bolzens 72 in die Bohrungen 46, 70 in der Schutzstellung arretiert. Es folgt das Ankoppeln der Ladervorrichtung 26, mittels Auflegen der Lagerelemente 54 beider Koppelteile 52 auf die Lagerpfannen 50, und das anschließende Verschwenken der Koppelteile 52 um die Lagerachsen der Lagerelemente 54 in Richtung der Bohrungen 56, bis die Bohrung 56 mit den in den Platten 86, 88 ausgebildeten Bohrungen 106 fluchten. Hierbei sei darauf hingewiesen, dass der Außenradius des buchsenförmigen Lagerelements 54 in etwa dem Radius der Lagerpfanne 50 entspricht und dass die Bohrung 106 in einem Abstand zum Mittelpunkt des Lagerelements 54 angeordnet ist, der dem Abstand der Bohrung 56 zum Mittelpunkt der Lagerpfanne 50 entspricht. Dadurch wird gewährleistet, dass die Bohrungen 56, 106 durch Verschwenken des Koppelteils 52 in Flucht gebracht werden können. Durch Einführen des Bolzens 108 in die Bohrungen 56, 106 wird das Koppelteil 52 und damit auch die Ladervorrichtung 26 fest mit der Aufnahmevorrichtung 24 verbunden.

Zur Erhöhung der Sicherheit des Geräteführers ist im rückwärtigen Bereich der Bedienungsplattform 20 ein sich im Wesentlichen vertikal erstreckender Schutzbügel 110 angeordnet. Der Schutzbügel 110 weist auf halber Höhe ein Scharnier 112 auf, welches mittels einer Verschraubung oder eines Bolzens 114 verschließbar ist. Der Schutzbügel 110 kann dadurch wahlweise in eine aufgerichtete oder in eine zusammengefaltete Stellung gebracht werden. Wenn eine möglichst geringe Ladegeräthöhe erwünscht ist, kann somit die vordere Schutzvorrichtung 48 in die Außerschutzstellung geschwenkt und der Schutzbügel 110 zusammengefaltet werden.

Als Alternative zu dem Scharnier 112 kann der Schutzbügel 110 auch als teleskopierbare Hohlprofilkonstruktion ausgebildet sein, derart, dass der Schutzbügel 110 mittels Spannschrauben, welche die Hohlprofilelemente gegeneinander verspannen, stufenlos in seiner wirksamen Länge veränderbar oder dass der Schutzbügel 110 mittels Arretierungsbohrungen an den Hohlprofilelementen in vorgebbaren Höhenstellungen arretierbar ist. Auch die Schutzvorrichtung 48 kann als derartige teleskopierbare Hohlprofilkonstruktion ausgebildet sein. Dadurch wird ermöglicht, dass auch bei Laderarbeiten die Ladegeräthöhe reduziert werden kann und dabei eine Schutzfunktion erhalten bleibt.

Vorzugsweise weist auch der Schutzbügel 110 einen sich horizontal und quer über die Bedienungsplattform 20, jedoch in Vorwärtsrichtung erstreckenden, oberen Teilbereich 116 auf. Befindet sich die Schutzvorrichtung 48 in Schutzstellung und der Schutzbügel 110 in einer aufgerichteten Stellung, wie in den Figuren 1 bis 3 dargestellt, können die Schutzvorrichtung 48 und der Schutzbügel 110, beispielsweise mittels Verschraubungen, welche durch Bohrungen 118 geführt werden, miteinander verbunden werden (siehe Figur 3). Dadurch entsteht eine käfigartige Schutzkonstruktion, die sich durch hohe Stabilität auszeichnet und insbesondere bei Laderarbeiten dem Geräteführer des Ladegeräts 10 eine hohe Sicherheit gegen herabfallendes Ladergut bietet.

## Patentansprüche

1. Ladegerät, insbesondere landwirtschaftliches Fahrzeug, mit einer einen Montagebereich (40) für eine Ladervorrichtung (26) aufweisenden Aufnahmevorrichtung (24), insbesondere für einen Frontlader, und einer an das Ladegerät (10) oder an die Aufnahmevorrichtung (24) gekoppelten Schutzvorrichtung (48), die in eine Schutzstellung und in eine Außerschutzstellung bringbar ist, **dadurch gekennzeichnet, dass** der Montagebereich (40) durch die Schutzvorrichtung (48) in der Außerschutzstellung blockierbar ist.

2. Ladegerät nach Anspruch 1, **dadurch gekennzeichnet, dass** eine Arretiereinrichtung enthalten ist, mit der die Schutzvorrichtung (48) in der Schutzstellung oder in der Außerschutzstellung arretierbar ist.

3. Ladegerät nach einem der Ansprüche 1 oder 2, **dadurch gekennzeichnet, dass** die Arretiereinrichtung wenigstens einen Befestigungspunkt (56) für die Ladervorrichtung (26) belegt, wenn die Schutzvorrichtung (48) in der Außerschutzstellung arretiert wird.

4. Ladegerät nach einem der Ansprüche 1 bis 3, **dadurch gekennzeichnet, dass** die Schutzvorrichtung (48) einen oberen Teilbereich aufweist, der sich in der Schutzstellung im Wesentlichen horizontal über eine Bedienungsplattform (20) erstreckt.

5. Ladegerät nach Anspruch 4, **dadurch gekennzeichnet, dass** der obere Teilbereich an die Kontur des Ladegeräts (10) angepasst ist und in der Außerschutzstellung wenigstens teilweise das Ladegerät (10) umschließt.

6. Ladegerät nach einem der Ansprüche 1 bis 5, **dadurch gekennzeichnet, dass** rückwärtig zur Bedienungsplattform (20) ein sich im Wesentlichen vertikal erstreckender Schutzbügel (110) angeordnet ist.

7. Ladegerät nach Anspruch 6, **dadurch gekennzeichnet, dass** der Schutzbügel (110) zusammenfaltbar ist.

8. Ladegerät nach einem der Ansprüche 1 bis 7, **dadurch gekennzeichnet, dass** die Schutzvorrichtung (48) in ihrer wirksamen Länge stufenweise oder stufenlos veränderbar ausgebildet ist.

9. Ladegerät nach einem der Ansprüche 1 bis 8, **dadurch gekennzeichnet, dass** der Schutzbügel (110) in seiner wirksamen Länge stufenweise oder stufenlos veränderbar ausgebildet ist.

10. Ladegerät nach einem der Ansprüche 1 bis 9, **dadurch gekennzeichnet, dass** die Schutzvorrichtung (48) in der Schutzstellung mit dem Schutzbügel (110) verbindbar ist.

11. Aufnahmevorrichtung einer Ladervorrichtung (26), insbesondere eines Frontladers, mit einem Montagebereich (40) und einer an die Aufnahmevorrichtung (24) gekoppelten Schutzvorrichtung (48), die in eine Schutzstellung und in eine Außerschutzstellung bringbar ist, **dadurch gekennzeichnet, dass** der Montagebereich (40) durch die Schutzvorrichtung (48) in der Außerschutzstellung blockierbar ist.
